Europäisches Patentamt

European Patent Office

Office européen des brevets

(19)

(11) Veröffentlichungsnummer: **0 123 274**
A2

# (12) EUROPÄISCHE PATENTANMELDUNG

(21) Anmeldenummer: 84104412.6

(22) Anmeldetag: 18.04.84

(51) Int. Cl.³: **A 01 N 3/00**

---

(30) Priorität: 25.04.83 DE 3314958

(43) Veröffentlichungstag der Anmeldung:
31.10.84 Patentblatt 84/44

(84) Benannte Vertragsstaaten:
AT BE CH DE FR GB IT LI LU NL SE

(71) Anmelder: Elstner, Erich F., Dr.
Wildmoosstrasse 18
D-8038 Gröbenzell(DE)

(71) Anmelder: Niehuss, Manfred, Dr.
Münchner Strasse 2
D-8011 Putzbrunn(DE)

(72) Erfinder: Elstner, Erich F., Dr.
Wildmoosstrasse 18
D-8038 Gröbenzell(DE)

(72) Erfinder: Niehuss, Manfred, Dr.
Münchner Strasse 2
D-8011 Putzbrunn(DE)

(74) Vertreter: Hansen, Bernd, Dr.rer.nat. et al,
Hoffmann, Eitle & Partner Patentanwälte Arabellastrasse
4
D-8000 München 81(DE)

---

(54) Schutz von Baum- und Strauchbestand vor Immissionsschäden.

(57) Verwendung eines Mittels aus einem wasserlöslichen Acrylpolymer, einem Vernetzungsmittel für das genannte Acrylpolymer und gegebenenfalls einer Initiatorsubstanz, zum Schutz von Baum- und Strauchbestand vor Immissionsschäden.

EP 0 123 274 A2

Croydon Printing Company Ltd.

40 092 m/fg

- 1 -

Schutz von Baum- und Strauchbestand vor Immissionsschäden

Die Erfindung betrifft die Verwendung eines Mittels
aus einem wasserlöslichen Acrylpolymer, einem Vernetzungsmittel für das genannte Acrylpolymer und gegebenenfalls einer Initiatorsubstanz, zum Schutz von
Baum- und Strauchbestand vor Immissionsschäden.

In den letzten Jahrzehnten haben sich durch den Übergang auf Grossfeuerungsanlagen, den Bau von Raffinerien, neuen chemischen Grossbetrieben, die zentralisierte Abführung der stark anwachsenden Abgasmassenströme über 200 bis 300 m hohe Schornsteine und die
Umwandlungsprozesse der Luftverunreinigungen während des Transportes in der Atmosphäre unter dem Einfluss verschiedener meteorologischer Parameter, Umweltbelastungen für den Baum- und Strauchbestand ergeben, die durch biologische Prozesse allein nicht mehr ausgeglichen bzw. verkraftet werden können.

Seit Beginn der Siebzigerjahre ist das Tannensterben in erheblichem Masse aufgetreten. Das Schadbild desselben ist durch eine von innen nach aussen und von unten nach oben fortschreitende Entnadelung der Krone gekennzeichnet. Ausserdem bildet sich im Inneren des Stammes ein krankhaft vergrösserter Nasskern, i.e. eine braunrot verfärbte, übelriechende Zone, die sich allmählich auf die wasserleitende Holzschicht unter der Rinde ausbreitet.

Die Erkrankung von Fichten ist in ihren typischen Ausprägungen erst seit den letzten Jahren bekannt. Die Symptome bestehen auch hier in einem allmählichen Nadelverlust, in einer Ausbildung von Verzweigungsanomalien sowie einer Schädigung des Feinwurzelsystems.

Das Kiefernsterben, dessen Schadbild durch zunehmende Blattverluste gekennzeichnet ist, ist schon länger bekannt. Eine neue Baumkrankheit nicht-parasitärer Art mit zahlreichen, bisher nicht beschriebenen Symptomen ist das "Buchensterben". Von ihr werden Rotbuchen jeglichen Alters befallen. Das "Buchensterben" stellt die infolge von Umweltbelastung aggressivste Krankheit dar, die bereits innerhalb einer Vegetationsperiode zum Absterben einer Buche führen kann.

Obwohl die jeweils auftretenden Symptome teilweise unterschiedlich sind, können einheitlich eine Entnadelung bzw. Entlaubung der befallenen Bäume, Wuchsstörungen bzw. Anomalien und eine Schädigung im Feinwurzelsystem festgestellt werden.

Nach biologischen Untersuchungen stellt die zunehmende Luftverschmutzung die Hauptursache dieser Baumerkrankungen dar. Insbesondere führt das in der Luft enthaltene $SO_2$ zu einer Übersäuerung der Atmosphäre sowie des Bodens. Aber auch andere Luftverunreinigungen oder ihre Folgeprodukte wirken negativ auf die Blattorgane. Sie hindern die Bildung von Assimilanten für Blattsubstanz, Trieb- und Wurzelwachstum, Holzzuwachs, Früchte. Durch den sauren Regen ergibt sich eine direkte Schädigung der Nadeln sowie eine Zerstörung der Wachsschicht. Diese Giftwirkung zerstört auch die Regulationsfähigkeit der Spaltöffnungen. Das erhöht die Transpiration der Pflanzen und führt zu unnötigen Wasserverlusten. Austrocknung ist die Folge. Schliesslich sind vorzeitige Alterung und fortschreitendes Siechtum, sowie pilzlicher und bakterieller Befall der Bäume zu beobachten.

Der saure Regen führt ausserdem zu einer Bodenversauerung, wodurch sich eine Veränderung der Bodenorganismen, eine Nährstoffauswaschung, Schäden im Feinwurzelbereich sowie die Freisetzung toxischer Metallionen ergeben.

Neben dem $SO_2$ enthält die mit Abgasen beladene Luft weitere pflanzentoxische Stoffe, wie Stickoxide, ungesättigte Kohlenwasserstoffe, Fotooxidantien, wie

Ozon oder PAN (Peroxyacetylnitrat). Diese sind zwar in geringeren Mengen vorhanden, sie sind jedoch zum Teil giftiger als $SO_2$. Daneben kommen - als staubförmige Komponenten der Luft - zahlreiche Schwermetalle vor. Auch sie werden infolge der hohen Schornsteine heute weit transportiert. Sie sind zum Teil hochtoxisch für Waldbäume.

Wenn man bedenkt, dass sich einige dieser Stoffe gegenseitig in ihrer negativen Auswirkung verstärken, dann wird klar, dass die räumlich und zeitlich stark variierende Zusammensetzung der Luft viel komplexer auf den Wald einwirken muss als $SO_2$ allein.

Hinzu kommen auch die in den Pflanzen durch diese Giftstoffe hervorgerufenen latenten Schäden. Z.B. ist bekannt, dass die Nettofotosynthese der Waldbäume durch $SO_2$ bis zu 40 % reduziert wird.

Latente Schäden führen zu einer erhöhten Empfindlichkeit gegenüber Klimaextreme, wie Dürre und Kälte. Die Anfälligkeit gegenüber Insekten und Mikroorganismen erhöht sich ebenfalls. So ist z.B. bekannt, dass der als Schwächeparasit bekannte Pilz Rhizosphaera kalkhoffii in geschädigten Hochlagenfichten in stärkerem Masse auftritt als gewohnt. Wie Untersuchungen belegen, wird der Befall durch diesen Pilz durch $SO_2$ gefördert. Möglicherweise wird hier ein durch $SO_2$ geschwächter Wirt von einem durch $SO_2$ gestärkten Parasiten befallen.

Aus den bisher durchgeführten $SO_2$-Begasungsversuchen lässt sich ableiten, dass ein über Jahrzehnte hinweg latent geschädigter Wald so viel Vitalität und Widerstandskraft eingebüsst hat, dass er zusätzlichen Belastungen nur noch beschränkt zu widerstehen vermag. Jahrzehntelange Luftverunreinigungen haben ein ausbalanciertes, und intaktes Ökosystem so geschwächt, dass es die Fähigkeit verloren hat, zusätzliche Belastungen ohne weitere Schäden abzupuffern. Daraus ist abzuleiten, dass dieses System bei anhaltender Belastung immer mehr an Reaktionsfähigkeit verlieren wird, und dass es eines Tages irreversible Schäden davonträgt.

Aus einer Veröffentlichung von Oded Ziv et al, "Control of Foliar Diseases with Epidermal Coating Materials" in Plant Disease, Band 67, Nr. 2, Seiten 212 ff., ist bekannt, Wachse und wachsähnliche Substanzen bei der Bekämpfung von Blattparasiten von Mais, Sorghum und Weizen einzusetzen. Das Besprühen der Pflanzen mit den wachsartigen Produkten führte zu einer Reduzierung von Anthracnose, Brand, Rost und Mehltau.

Ausserdem ist es aus US-PS 4,094,845 und 4,169,902 bekannt, ein Mittel aus einem carboxylierten, hydrophilen Acrylsäurepolymer, einem Vernetzungsmittel und einem UV-absorbierenden Agens, als sogenanntes "Antitranspiranz" zur Verhinderung der Verdunstung von Wasser in den Blättern der Wirtsppflanze einzusetzen, und diese vor Schäden durch Wind und Kälte zu schützen; im weiteren sollen durch Anwendung dieses Mittels Tiere, insbesondere Vögel, in Gebieten von Flughäfen etc. von den Pflanzen ferngehalten werden.

Aufgabe der vorliegenden Erfindung ist es, die Verwendung eines Mittels zur Verfügung zu stellen, das den Baum- und Strauchbestand vor ökologisch bedingten Immissionsschäden zu schützen vermag.

Diese Aufgabe wird gemäss der Erfindung gelöst durch die Verwendung eines Mittels aus einem wasserlöslichen Acrylpolymer, einem Vernetzungsmittel für das genannte Acrylpolymer und gegebenenfalls einer Initiatorsubstanz, zum Schutz von Baum- und Strauchbestand vor Immissionsschäden.

Unter den ökologisch bedingten Immissionsschäden sind insbesondere zu nennen: die Übersäuerung der Atmosphäre und des Bodens allgemein durch luftverunreinigende Stoffe, wie Schwefeldioxid, Stickoxide, ungesättigte Kohlenwasserstoffe, Fotooxidantien, wie insbesondere Ozon und Peroxiacetylnitrat (PAN), sowie Schwermetalle.

Unter der Bezeichnung "wasserlösliches Acrylpolymer" mit funktionellen Gruppen" ist gemäss der Erfindung ein Polymer oder Copolymer zu verstehen, das durch Polymerisation einer alpha,beta-ungesättigten organischen Säure erhalten worden ist. Beispiele derartiger ungesättigter Säuren umfassen: Acrylsäure, Methacrylsäure, Itakonsäure, Maleinsäure, Crotonsäure, Ethacrylsäure, etc.. Unter diesen sind Acrylsäure und Methacrylsäure besonders bevorzugt.

Gemäss der Erfindung zu verwendende weitere Monomere zur Herstellung des wasserlöslichen Polymers umfassen

folgende Verbindungen: $C_1$-$C_8$-Alkylacrylat- und Methacrylatester, die gegebenenfalls mit Comonomeren, wie Methylmethacrylat, Ethylmethacrylat, Acrylnitril, Styrol, Vinylacetat, Vinylpropionat, Vinylchlorid, Vinylidenchlorid, etc., polymerisiert sind.

Die wasserlöslichen Acrylpolymerverbindungen gemäss der Erfindung bestehen vorzugsweise aus $C_1$-$C_6$-Alkylacrylaten und -Methacrylaten, besonders bevorzugt aus $C_1$-$C_4$-Alkylacrylaten und -Methacrylaten, wie Methylacrylat, Ethylacrylat, n-Propylacrylat, Isopropylacrylat, Butylacrylate und entsprechende Methacrylate. Diese Verbindungen können in den erfindungsgemässen wasserlöslichen Acrylpolymeren einzeln oder im Gemisch enthalten sein.

Die wasserlöslichen Acrylpolymere gemäss der Erfindung verfügen über funktionelle Gruppen. Diese am Polymermolekül vorkommenden funktionellen Gruppen können freie Carboxylgruppen, Hydroxylgruppen oder C-C-Doppelbindungen darstellen. Besonders bevorzugt ist das Vorhandensein von freien Carboxylgruppen am Acrylpolymer. Aus diesem Grund ist der Einsatz von Comonomeren aus Niedrig-Alkylacrylaten und Methacrylaten und carboxylhaltigen Comonomerverbindungen besonders bevorzugt. Besonders geeignet ist gemäss der Erfindung die Verwendung eines Polymers aus einem $C_1$-$C_4$-Alkylacrylat oder Methacrylat mit 5 bis 10 Gew.-% eines Acrylsäure-Monomeren.

Eine wasserlösliche Acrylpolymerverbindung, die sich gemäss der Erfindung besonders eignet, setzt sich wie folgt zusammen: 40 bis 70 Gew.-% Methylmethacrylat, 10 bis 40 Gew.-% Ethylmethacrylat und 10 bis 20 Gew.-% Acrylsäure. Ein weiteres gemäss der Erfindung bevorzugt zu verwendendes Polymer setzt sich aus 30 bis 60 Gew.-% Butylacrylat, 30 bis 50 Gew.-% Methylacrylat und 10 bis 20 Gew.-% Acrylsäure zusammen. Ebenfalls bevorzugt ist ein Polymer mit der Zusammensetzung: 90 Gew.-% Ethylacrylat und 10 Gew.-% Acrylsäure.

Ein geeignetes im Handel erhältliches wasserlösliches Acrylpolymer, das gemäss der Erfindung verwendet werden kann, ist Carboset 514 H, eine Dispersion in wässrigem Ammoniak mit 40 Gew.-% Feststoff, oder als Lösung in Isopropanol mit 70 Gew.-% Feststoff, von der Firma Goodrich Chemical. Das Handelsprodukt Carboset 514 H ist eine Dispersion eines Acrylsäureharzes, dessen polare Gruppen Carboxylgruppen darstellen. Das Polymer hat ein Molekulargewicht von 30.000 und eine Säurezahl von 60 bis 70.

Ausserdem ist es besonders bevorzugt, das von der Firma Agro-K Corp., Minneapolis, USA, unter dem Namen PRO-TEC vertriebene Produkt für die erfindungsgemässe Verwendung einzusetzen.

Um die Anwendung der Acrylpolymere für die erfindungsgemässe Verwendung zu erleichtern, ist es bevorzugt, dieselben in Wasser unter Einstellung eines pH-Wertes von 8 oder höher zu solubilisieren. Geeignete Mittel zur Einstellung des pH-Wertes sind Alkalihydroxide, Ammoniumhydroxid sowie organische Amine.

Das Molekulargewicht des erfindungsgemäss verwendeten Acrylpolymers kann in einem weiten Bereich variieren; es kann ein Molekulargewicht von 5.000 bis zu einigen Millionen aufweisen. Vorzugsweise beträgt das Molekulargewicht des genannten Polymeren 10.000 bis 100.000. Diese Angaben zum Molekulargewicht beziehen sich auf das Polymere vor der Vernetzung. Nach der Vernetzung, die in der Hauptsache auf der Pflanzenoberfläche selbst erfolgt, kann das Molekulargewicht bis zu mehrere Millionen betragen.

Als Vernetzungsmittel in der erfindungsgemäss verwendeten Zubereitung eignen sich bifunktionelle und polyfunktionelle Materialien, die mit den funktionellen Gruppen des wasserlöslichen Acrylpolymers reagieren können. Als Vernetzungsmittel kann in der erfindungsgemäss verwendeten Zubereitung jedes hierfür geeignete Mittel, das über entsprechende funktionelle Gruppen verfügt, verwendet werden.

Beispielhaft sollen im folgenden einige besonders geeignete Vernetzungsmittel angegeben werden: Formaldehydharze, Epoxyharze und mehrwertige Metallionen.

Unter den Formaldehydharzen sind Harze auf der Basis von Melamin, wie z.B. Methylolmelamine und niedrigmolekulare Melaminformaldehydharze sowie Phenolaldehydharze zu nennen.

Unter den Epoxyverbindungen eignen sich insbesondere Epoxyharze von niederem Molekulargewicht und Diglycidyl- und Triglycidylether.

Als geeignete mehrwertige Metallionen sind die Oxide und Hydroxide von Calcium, Zink und Titan zu nennen.

Unter den kommerziell erhältlichen Formaldehydharzen sind zu nennen: Cyme 300 von American Cyanamid und Resimene RF 5306 von Monsanto Chemical Co.. Die Melaminformaldehydharze sind unter den Vernetzungsmitteln besonders bevorzugt.

Unter den im Handel erhältlichen Epoxyverbindungen sind zu nennen: Epon 812 von Shell Chemical Co., ein Glyzerin-Triglycidylether; Epon 828, der von Epichlorhydrin und Bisphenol A abgeleitete Diglycidylether; Eponite 100 von Shell Chemical Co., und DER 332 von Dow Chemical Co.. Besonders bevorzugt sind der Bisphenol-A-Diglycidylether und der Glycerin-triglycidylether.

Bei der Verwendung von mehrwertigen Metallverbindungen als Vernetzungsmittel, insbesondere bei Zinkverbindungen, bereitet man vorzugsweise eine Ammoniumcarbonatlösung, die zu der Lösung oder Dispersion des Polymers zugegeben wird.

Der gemäss der Erfindung gegebenenfalls verwendete Initiator stellt vorzugsweise einen fotochemischen Initiator dar, insbesondere ein im UV-Bereich absorbierendes Agens. Es ist bevorzugt, dass die im UV-Bereich absorbierende Initiatorsubstanz im Wellenlängenbereich von 2.700 bis ca. 4.000 A absorbiert. Als besonders geeignete Initiatorverbindungen sind zu nennen: Ester von para-Aminobenzoesäure, wie der Glycerylester; Ester von substituierten para-Aminobenzoesäuren und para-Methoxyzimtsäure, wie z.B. der

2-Ethoxyethylester; Cumarinether; Benzophenonderivate, wie z.B. 2-Hydroxy-4-methoxy-benzophenon; von aromatischen Aldehyden abgeleitete Hydrazone, Bisoxalsäurediamide; Benzoylbenzofuranderivate; Fromazanderivate; ebenfalls geeignet sind Metallchelate von Bicyclononandionester; 2-Acryl-4,5-arylo-1,2,3-triazole.

Als besonders bevorzugte Initiatorsubstanz ist 2-Ethoxyethyl-p-methoxy-cinnamat zu nennen, das unter dem Handelsnamen GIV-TanF von der Firma Sindar Division of Giuvadan Corp., Clifton, N.J., erhältlich ist.

Die Zusammensetzung des erfindungsgemäss verwendeten Mittels aus wasserlöslichem Acrylpolymer, Vernetzungsmittel und Initiatorsubstanz ist vorzugsweise so zu wählen, dass das Mittel vor der Anwendung noch eine bestimmte Zeit gelagert werden kann. Besonders bevorzugt ist es, wenn das Mischungsverhältnis so eingestellt wird, dass eine nennenswerte Vernetzung und damit Erhöhung des Molekulargewichtes erst nach ca. drei bis sechs Tagen Lagerung bei Raumtemperatur eintritt. Auf diese Weise ist es möglich, das erfindungsgemäss verwendete Mittel einige Zeit vor der Anwendung zu mischen und es dann in den darauffolgenden Tagen auf die Pflanzen aufzusprühen. Es hat sich gezeigt, dass Melaminformaldehydharze den erfindungsgemässen Mitteln eine ausgesprochene Lagerbeständigkeit vermitteln, sofern das Mittel vor Einwirkung ultravioletter Strahlen geschützt wird. Obwohl eine mehrtägige Lagerung des erfindungsgemäss verwendeten Mittels möglich sein soll, ist es doch besonders vorteilhaft, dasselbe unmittelbar vor der Verwendung zu mischen, da es sich aufgrund der verhältnismässig niederen Viskosität zu diesem Zeitpunkt am leichtesten applizieren lässt.

In dem erfindungsgemäss verwendeten Mittel wird ein Mischungsverhältnis der einzelnen Komponenten gewählt, wonach das wasserlösliche Acrylpolymer in einem Anteil von 80 bis 99 Gew.-%, das Vernetzungsmittel im Bereich von 1 bis 15 Gew.-%, bevorzugt 1 bis 5 Gew.-%, und der Initiator in einer Menge von 0,0001 Gew.-%, bevorzugt 0,0005 bis 0,20 Gew.-%, bezogen auf das Gesamtfeststoffgewicht des Mittels vorliegt.

Die erfindungsgemäss verwendeten Lösungen oder Dispersionen des genannten Mittels enthalten dasselbe in Anteilen von 3 bis 30%, vorzugsweise von 3 bis 15 %, besonders bevorzugt von 5 bis 10 %.

Im allgemeinen wird das erfindungsgemäss verwendete Mittel in einer Menge von 50 bis 500 l/ha auf die Pflanzen aufgebracht. Bevorzugt ist eine Applikation des Mittels in einer Menge von 50 l/ha.

Die Applikation des erfindungsgemäss verwendeten Mittels erfolgt nach bekannten Methoden der Tauch- oder Sprühbehandlung, bevorzugt jedoch nach dem ULV- oder C-D-A-Verfahren. Hierzu wird auf die in der DE-OS 1 313 673 beschriebene Vorrichtung zum Versprühen von Flüssigkeiten und Suspensionen hingewiesen, wobei man kleine Tröpfchen von einer rotierenden Schleuderscheibe als Sprühkegel abschleudeet, indem man während des Versprühens in einer im Inneren des Sprühkegels liegenden Zone einen zur Ausbildung einer den Sprühkegel verengenden Zentripetalströmung hinreichenden Unterdruck erzeugt.

Die erfindungsgemässe Verwendung eignet sich allgemein zur Verhinderung von Schädigungen an Bäumen und Sträuchern infolge ökologisch bedingter Immissionen, wie sie vorstehend beschrieben wurden. Besonders bevorzugt ist die erfindungsgemässe Verwendung zum Schutze von Nadelbäumen, wie insbesondere Tannen, Fichten, Kiefern. Darüber hinaus eignet sich die erfindungsgemässe Anwendung auch zum Schutze von Laubbäumen, insbesondere von Buchen.

Nach einer bevorzugten Ausführungsform fügt man zu dem erfindungsgemäss verwendeten Mittel 50 bis 100g EDU(N-2(2-oxo-1-imidazolidinyl)ethyl-N-phenyl-Harnstoff) pro l, um vorbeugend eine Resistenz gegenüber Fotooxidantien zu induzieren, wodurch erhöhte Aktivitäten des Schutzenzyms Superoxiddismutase ausgelöst werden. In diesem Zusammenhang wird auf die Veröffentlichung von Lee und Bennet in Plant Physiol. 69 [1982] Seiten 1444 bis 1449 für Phaseolus vulgaris l. hingewiesen. Durch die erfindungsgemässe Verwendung ist es ausserdem möglich, die durch die Immissionen verminderte Regulationsfähigkeit der Spaltöffnungen zu verhindern. Durch die Aufbringung einer künstlichen Strukturschicht auf die Oberfläche der Pflanzenteile wird die sogenannte Spaltöffnungsstarre verhindert, einen Angriffspunkt für pilzlichen und bakteriellen Befall sowie für den Befall durch phytopathogene Insekten etc. bietet.

Eine Reduzierung der Fotosynthese der Pflanze wird durch diese Strukturschicht nicht bewirkt. Insbesondere bei den durch Immissionen teilgeschädigten, latent geschädigten oder gefährdeten grünen, assimilierenden Pflanzenteilen kann mit Hilfe der erfindungsgemässen Anwendung die Spaltöffnungsstarre verhindert werden.

Schliesslich soll durch die erfindungsgemässe Anwendung eine Reduzierung bzw. eine Wegnahme der "Stresseinwirkungen" auf die Pflanzen erfolgen, wodurch diesen die Möglichkeit gegeben wird, sich selbst endogen zu regenerieren.

Die Applikation des erfindungsgemässen Mittels kann mit üblichen Spritz- und Sprühgeräten erfolgen. Vorzuziehen sind jedoch Behandlungen mit ULV- oder C-D-A-Verfahren (Controlled-Droplet-Application) mit Tröpfchengrössen der Feinsprühung im Bereich von 40 bis 100 µm. Beim C-D-A-Verfahren sollten möglichst Drehscheiben-Applikatoren zum Einsatz kommen.

Die zuletzt genannten Verfahren sind besonders geeignet, um bei den Zielkulturen eine bessere Abdeckung des Sprühbelages zu erzielen. Für die Anwendung der für den Strukturschutz vorgesehene Substanzen sind diese Verfahren sicher, da auch bei Abdrift von Sprühflüssigkeit auf nicht für die Behandlung vorgesehene Nachbarkulturen keine Schädigungen dieser Kul-turen zu erwarten sind.

Bei der Behandlung grösserer Baumbestände ist es insbesondere wesentlich, den Bereich der Baumkronen weitgehend mit einer Strukturschicht zu überziehen. Somit ist es bei grösseren Baum- und Strauchbeständen vorteilhaft, die Besprühung von der Luft aus vorzunehmen. Auch hier eignet sich besonders das vorstehend beschriebene C-D-A-Verfahren.

Die folgenden Beispiele sollen die erfindungsgemässe Anwendung näher erläutern, ohne dass der Schutzumfang durch diese beschränkt werden soll.

Versuch 1

Im folgenden wurde untersucht, inwieweit die erfindungsgemässe Anwendung zum Schutz vor Umweltgiften analytisch nachgewiesen werden kann. Es ist bekannt, dass die Pflanzen als Antwort auf "Stress" oder Vergiftungen das Wundhormon Ethylen bilden, und zwar durch enzymatische Umwandlung der Aminosäure Methionin über das Zwischenprodukt Aminocyclopropancarbonsäure (ACC).

Wird eine pflanzliche Zelle stark geschädigt oder intoxifiziert, so bricht die intrazelluläre Kompartimentierung zusammen und es kommt zum Zelltod. Dabei wird kein Ethylen mehr gebildet, sondern es erfolgt über einen möglicherweise unkontrollierten peroxidativen Abbau der dreifach ungesättigten Linolensäure die Bildung des Gases Ethan. Das Verfahren der Bestimmung des Ethylen/Ethan-Verhältnisses ist ein empfindlicher Indikator für den Schädigungsgrad pflanzlicher Zellen, vor allem von grünen assimilierenden Pflanzenteilen (I.F.Elstner und J.R. Konze, Nature, Band 263, Nr. 5575, Seiten 351 bis 352,[1976]). Die Gültigkeit der Anwendung dieses Verfahrens zur Erfassung von $SO_2$-Schädigungen an Nadeln von Fichten wurde von Kimmerer und Koszlowski (Plant Physiol. [1982] 69, 840 - 847) bestätigt.

Im vorliegenden Versuch wurde geprüft, in welchem Masse durch die Anwendung des im Handel erhältlichen Mittels PRO-TEC die $SO_2$- bzw. $HSO_3^-$-Belastung grüner Fichtennadeln signifikant reduziert werden kann. Hierzu wurden jeweils fünf Parallelansätze mit ca. 30 grünen Nadeln von Serbischer Fichte eingewogen und unzerschnitten angewendet. Je fünf Proben wurden in eine 1:1 verdünnte Pro-Tec-Lösung getaucht und weitere fünf Proben wurden in Wasser eingetaucht.

Nach 3 Stunden (nach dieser Zeit war die Pro-Tec-Lösung vollständig getrocknet) erfolgte eine 17-stündige Dunkelinkubation in je 3 ml 40mM $NaHSO_3$-Lösung.

Die Kontrollsansätze wurden ebenso mit Pro-Tec-Lösung bzw. mit $H_2O$ behandelt, dann jedoch in Acetatpuffer (pH 5,5) inkubiert.

Die Messung der Ethan- und Ethylen-Konzentration erfolgte nach 17 h Dunkelinkubation, nach 1,5 h, 3 h und 5 h Belichtung bei ca. 23°C.

Die Bestimmung von Ethan und Ethylen ergab, dass Pro-Tec die $H_2SO_3^-$-Belastung grüner Fichtennadeln signifikant zu reduzieren vermag: Die Ethan-Bildung als Indikator einer voranschreitenden Dekompartimentierung wird durch die Pro-Tec-Behandlung um ca. 70% reduziert und die (lichtabhängige) Ethylen-Bildung verläuft anfänglich weniger steil als in der unbehandelten Kontrolle.

Versuch 2

Die "Zugänglichkeit" von "Phytoeffektoren" wurde mit den Ethylen-Vorläufern Alsol, Ethrel und ACC (Aminocyclopropancarbonsäure) an Kartoffelblättern untersucht.

Es kann davon ausgegangen werden, dass das was für die Zugänglichkeit von Phytoeffektoren gilt, in analoger Weise auch für die hier infrage stehenden Giftstoffe zutrifft.

Hierzu wurden nicht behandelte bzw. mit Pro-Tec behandelte Kartoffelblätter mit Ethrel, ACC bzw. Alsol besprüht.

Es erfolgte ein Vergleich der Sorten Omega, Scala, H 2680/77, H 265/77.

Die Blätter von ca. 1 bis 2 Pflanzen pro Sorte wurden dazu in eine 1:1 verdünnte Pro-Tec-Lösung getaucht. Nach etwa 20 h wurden die Blätter abgeschnitten, eingewogen und mit 0,5%iger Ethrel-, ACC- bzw. Alsol-Lösung bis zum Abtropfen besprüht. Unbehandelte Vergleichspflanzen (ohne Pro-Tec-Überzug) wurden genauso behandelt. Zusätzlich wurden sowohl Proben von behandelten und unbehandelten Blättern hergestellt, die mit reinem $H_2O$ besprüht wurden.

Die Messung der Ethylen-Konzentration erfolgte nach einstündiger Inkubation im Dunkeln bei Raumtemperatur.

Die nachfolgende Tabelle gibt die Ergebnisse dieses Versuches wieder.

## Tabelle

Ethylenbildung von mit Pro-Tec-behandelten und unbehandelten Kartoffelblättern

| Zusatz 0,5%ige Lösung | Ethylen (nMol/g Frischgewicht) | |
| --- | --- | --- |
| | Pro-Tec behandelt | unbehandelt Kontrolle |
| Wasser | 1,1 | 3.1 |
| ACC-Lösung | 43,3 | 44,2 |
| Alsol-Lösung | 926,7 | 1.550,2 |

Während Alsol beim Kontakt mit benetzten Blattoberflächen rein chemisch Ethylen freisetzen, muss das stark hydrophile ACC durch die Spaltöffnungen ins Blattinnere diffundieren, wo es nicht rein chemisch, sondern enzymkatalysiert zu Ethylen umgewandelt wird.

Wie aus der vorstehenden Tabelle hervorgeht, bewirkt die Pro-Tec-Behandlung kaum eine Beeinflussung der ACC-Umsetzung, behindert jedoch stark die Alsol-Reaktion. Dieses Ergebnis kann mit dem durch die Pro-Tec-Behandlung verliehenen Oberflächenschutz der Kartoffelblätter erklärt werden. Im Gegensatz dazu behindert der Pro-Tec-Oberflächenschutz jedoch die Penetration von ACC durch die Stomata nicht.

<u>P a t e n t a n s p r ü c h e</u>

1. Verwendung eines Mittels aus einem wasserlöslichen Acrylpolymer, einem Vernetzungsmittel für das genannte Acrylpolymer und gegebenenfalls einer Initiatorsubstanz, zum Schutz von Baum- und Strauchbestand vor Immissionsschäden.

2. Verwendung gemäss Anspruch 1, wobei das Mittel ein Polymer aus $C_1$-$C_6$-Alkylacrylat oder Methacrylat oder ein Copolymer aus $C_1$-$C_6$-Alkylacrylat oder Methacrylat und einem Acrylsäuremonomeren umfasst.

3. Verwendung gemäss Anspruch 1, wobei das Mittel als Vernetzungsagens ein Methylolmelamin, ein niedrigmolekulares Epoxyharz, ein Harz auf der Basis von Phenol-Formaldehyd oder Melamin-Formaldehyd, Bisphenol-A-Diglycidylether, Glycerin-triglycidylether, einen Diglycidyl- oder Triglycidylether oder ein Oxid oder Hydroxid von Calcium oder Zink umfasst.

4. Verwendung gemäss Ansprüchen 1 bis 3, wobei das Vernetzungsagens in einem Anteil von 1 bis 5 Gew.-%, bezogen auf das Gesamtfeststoffgewicht des Mittels vorliegt.

5. Verwendung gemäss Anspruch 1, wobei das Mittel als Initiatorsubstanz ein UV-absorbierendes Agens in Anteilen von 0,0001 bis 0,20 Gew.-%, bezogen auf das Gesamtfeststoffgewicht des Mittels, enthalten ist.

6.　Verwendung gemäss Anspruch 1, wobei das Mittel als Initiatorsubstanz einen Ester von gegebenenfalls substituierten para-Aminobenzoesäuren und para-Methoxyzimtsäure umfasst.

7.　Verwendung gemäss Anspruch 1, wobei das Mittel das Vernetzungsagens in Anteilen von 1 bis 5 Gew.-%, gegebenenfalls die Initiatorsubstanz in Anteilen von 0,0005 bis 0,20 Gew.-%, bezogen auf das Gesamtfeststoffgewicht des Mittels umfasst und der Rest das Polymer oder Copolymer einer ungesättigten organischen Säure darstellt.

8.　Verwendung gemäss Anspruch 1, wobei die Applikation des Mittels nach dem ULV- oder C-D-A-Verfahren (Controlled Droplet-Application) erfolgt.

9.　Verwendung gemäss Anspruch 1, wobei das Mittel in einer Konzentration von 3 bis 10 % und in einer Menge von 50 bis 500 l/ha appliziert wird.

10.　Verwendung des Mittels gemäss einem oder mehreren der Ansprüche 1 bis 9 zum Schutz von Baum- und Strauchbestand vor Umwelteinflüssen, wie Übersäuerung der Atmosphäre und des Bodens, Schädigung durch $SO_2$, Stickoxiden, ungesättigte Kohlenwasserstoffe, Fotooxidantien, Ozon, Peroxiacetylnitrat (PAN) und Schwermetalle.

11.　Verwendung gemäss einem oder mehreren der Ansprüche 1 bis 9 zum Schutz von Nadelbäumen, insbesondere von Tannen, Fichten, Kiefern und Buchen.

- 21 -

0123274

12. Verwendung gemäss einem oder mehreren der Ansprüche 1 bis 9 zur Verhinderung der Spaltöffnungsstarre.

13. Verwendung gemäss Ansprüchen 1 bis 9 unter Zusatz von EDU(N-2-(2-oxo-1-imidazolidinyl)ethyl-N-phenyl-Harnstoff) zum Schutz von Fichten, Tannen, Kiefern und Buchen.

**0123274**
40 092

P a t e n t a n s p r ü c h e

1. Verfahren zur Verwendung Verwendung eines Mittels aus einem wasserlöslichen Acrylpolymer, einem Vernetzungsmittel für das genannte Acrylpolymer und gegebenenfalls einer Initiatorsubstanz, zum Schutz von Baum- und Strauchbestand vor Immissionsschäden.

2. Verfahren gemäss Anspruch 1, wobei das Mittel ein Polymer aus $C_1$-$C_6$-Alkylacrylat oder Methacrylat oder ein Copolymer aus $C_1$-$C_6$-Alkylacrylat oder Methacrylat und einem Acrylsäuremonomeren umfasst.

3. Verfahren gemäss Anspruch 1, wobei das Mittel als Vernetzungsagens ein Methylolmelamin, ein niedrigmolekulares Epoxyharz, ein Harz auf der Basis von Phenol-Formaldehyd oder Melamin-Formaldehyd, Bisphenol-A-Diglycidylether, Glycerin-triglycidylether, einen Diglycidyl- oder Triglycidylether oder ein Oxid oder Hydroxid von Calcium oder Zink umfasst.

4. Verfahren gemäss Ansprüchen 1 bis 3, wobei das Vernetzungsagens in einem Anteil von 1 bis 5 Gew.-%, bezogen auf das Gesamtfeststoffgewicht des Mittels vorliegt.

5. Verfahren gemäss Anspruch 1, wobei das Mittel als Initiatorsubstanz ein UV-absorbierendes Agens in Anteilen von 0,0001 bis 0,20 Gew.-%, bezogen auf das Gesamtfeststoffgewicht des Mittels, enthalten ist.

6. Verfahren gemäss Anspruch 1, wobei das Mittel als Initiatorsubstanz einen Ester von gegebenenfalls substituierten para-Aminobenzoesäuren und para-Methoxyzimtsäure umfasst.

7. Verfahren gemäss Anspruch 1, wobei das Mittel das Vernetzungsagens in Anteilen von 1 bis 5 Gew.-%, gegebenenfalls die Initiatorsubstanz in Anteilen von 0,0005 bis 0,20 Gew.-%, bezogen auf das Gesamtfeststoffgewicht des Mittels umfasst und der Rest das Polymer oder Copolymer einer ungesättigten organischen Säure darstellt.

8. Verfahren gemäss Anspruch 1, wobei die Applikation des Mittels nach dem ULV- oder C-D-A-Verfahren (Controlled Droplet-Application) erfolgt.

9. Verfahren gemäss Anspruch 1, wobei das Mittel in einer Konzentration von 3 bis 10 % und in einer Menge von 50 bis 500 l/ha appliziert wird.

10. Verfahren zur Verwendung des Mittels gemäss einem oder mehreren der Ansprüche 1 bis 9 zum Schutz von Baum- und Strauchbestand vor Umwelteinflüssen, wie Übersäuerung der Atmosphäre und des Bodens, Schädigung durch $SO_2$, Stickoxiden, ungesättigte Kohlenwasserstoffe, Fotooxidantien, Ozon, Peroxiacetylnitrat (PAN) und Schwermetalle.

11. Verfahren gemäss einem oder mehreren der Ansprüche 1 bis 9 zum Schutz von Nadelbäumen, insbesondere von Tannen, Fichten, Kiefern und Buchen.

12. Verfahren gemäss einem oder mehreren der Ansprüche 1 bis 9 zur Verhinderung der Spaltöffnungsstarre.

13. Verfahren gemäss Ansprüchen 1 bis 9 unter Zusatz von EDU(N-2-(2-oxo-1-imidazolidinyl)ethyl-N-phenyl-Harnstoff) zum Schutz von Fichten, Tannen, Kiefern und Buchen.